# EUROPÄISCHE PATENTSCHRIFT

(11) **EP 1 204 815 B1**
(45) Veröffentlichungstag und Bekanntmachung des Hinweises auf die Patenterteilung: **25.05.2005**
(21) Anmeldenummer: 00954501.3
(22) Anmeldetag: 14.07.2000
(51) Int. Cl.: F01N 3/08, F01N 3/28

(54) **VERFAHREN ZUR REGELUNG EINER ABGASTEMPERATUR EINER MAGERBRENNKRAFTMASCHINE WÄHREND EINER ENTSCHWEFELUNG EINES KATALYSATORS**
METHOD FOR REGULATING THE EXHAUST GAS TEMPERATURE OF A LEAN COMBUSTION ENGINE DURING THE DESULPHURIZATION OF A CATALYST
PROCEDE DE REGLAGE DE LA TEMPERATURE DES GAZ D'ECHAPPEMENT D'UN MOTEUR A COMBUSTION INTERNE A MELANGE PAUVRE PENDANT UNE DESULFURATION D'UN CATALYSEUR

(30) Priorität: 28.07.1999 DE 19935341
(43) Veröffentlichungstag der Anmeldung: 15.05.2002
(73) Patentinhaber: Volkswagen Aktiengesellschaft, 38436 Wolfsburg (DE)
(72) Erfinder: STANDT, Ulrich-Dieter, 38527 Meine (DE); WASCHATZ, Uwe, 38527 Meine (DE)
(74) Vertreter: Schneider, Henry, Dipl.-Ing.
(86) Internationale Anmeldenummer: PCT/EP2000/006726
(87) Internationale Veröffentlichungsnummer: WO 2001/009491

(56) Entgegenhaltungen:
- EP-A- 0 860 595
- EP-A- 0 893 154
- EP-A- 0 899 431
- DE-A- 19 731 624
- US-A- 5 758 493

## Beschreibung

Die Erfindung betrifft ein Verfahren zur Regelung einer Abgastemperatur einer Magerbrennkraftmaschine während einer Entschwefelung eines Katalysatorsystems zur Reinigung eines Abgases der Magerbrennkraftmaschine mit den im Oberbegriff des Anspruchs 1 genannten Merkmalen.

Magerlauffähige Brennkraftmaschinen, die zumindest abschnittsweise zusammenhängend mager betrieben werden und im Gesamtmittel einer jeden, nicht unterbrochenen Magerphase eine NOₓ-Masse von mindestens 0,1 g emittieren, werden im folgenden kurz Magerbrennkraftmaschine genannt. In der Praxis verwendete Katalysatorsysteme zur Reinigung des Abgases der Magerbrennkraftmaschine umfassen wenigstens einen NOₓ-Speicherkatalysator sowie einen stromauf des NOₓ-Speicherkatalysators angeordneten Vorkatalysator. Der Vorkatalysator kann beispielsweise ein 3-Wege-Katalysator sein, unterstützt aber zumindest eine exotherme Oxidation von während eines Verbrennungsvorganges in der Magerbrennkraftmaschine gebildeten Reduktionsmitteln, wie CO, HC oder H₂.

Während des Verbrennungsvorganges eines Luft-Kraftstoff-Gemisches entstehen neben den Reduktionsmitteln Stickoxide NOₓ. An dem NOₓ-Speicherkatalysator kann das NOₓ mit Hilfe der Reduktionsmittel wieder zu Stickstoff reduziert werden. Befindet sich die Magerbrennkraftmaschine jedoch in einem verbrauchsgünstigen Magerbetrieb mit λ > 1, so überwiegt ein Sauerstoffanteil einen Kraftstoffanteil im Luft-Kraftstoff-Gemisch, und infolgedessen ist auch ein Anteil der Reduktionsmittel am Abgas gemindert. Zur Abhilfe wird das NOₓ während des Magerbetriebes im NOₓ-Speicherkatalysator als Nitrat chemiesorbiert, bis eine NOₓ-Desorptionstemperatur überschritten oder ein maximaler NOₓ-Beladungszustand des NOₓ-Speicherkatalysators erreicht wird. Vor diesem Zeitpunkt muß der Katalysator regeneriert werden, das heißt, es muß ein Wechsel eines Arbeitsmodus der Magerbrennkraftmaschine von dem Magerbetrieb in einen Fettbetrieb oder stöchiometrischen Betrieb mit λ ≤ 1 erfolgen.

Gängige Kraftstoffe beinhalten in wechselnden Anteilen schwefelhaltige Verbindungen, die während des Verbrennungsvorganges zur Bildung von Schwefeloxiden SOₓ führen. Das SOₓ wird neben dem NOₓ vom NOₓ-Speicherkatalysator als Sulfat absorbiert. Damit ist eine NOₓ-Speicherkapazität des NOₓ-Speicherkatalysators gemindert, und der Katalysator muss in regelmäßigen Abständen SOₓ-regeneriert (entschwefelt) werden.

Allerdings ist eine thermodynamische Stabilität des Sulfats größer als die des Nitrats, und unter den üblichen NOₓ-Regenerationsparametern ist demnach häufig noch nicht eine notwendige Mindestentschwefelungstemperatur zur SOₓ-Desorption erreicht. Infolgedessen müssen für die Entschwefelung zusätzliche, eine Abgastemperatur erhöhende Maßnahmen ergriffen werden.

Derartige Maßnahmen zur Erhöhung der Abgastemperatur können beispielsweise eine Spätzündung des Luft-Kraftstoff-Gemisches, eine Nacheinspritzung während oder nach Ende des Verbrennungsvorganges oder auch bereits ein Wechsel des Arbeitsmodus der Magerbrennkraftmaschine von λ > 1 in λ ≤ 1 sein, da in der Regel die Abgastemperatur im Magerbetrieb geringer ist. Nachteilig bei den genannten Maßnahmen ist jedoch, dass sie zu einer Änderung einer Gesamtenergieabgabe der Magerbrennkraftmaschine führen können. Infolgedessen kann es während der Entschwefelung zu unerwünschten Fahrsituationen bei einem Antrieb eines Kraftfahrzeuges durch die Magerbrennkraftmaschine kommen. Beispielhaft seien hier Vibrationen einer Fahrzeugkarosserie oder Schubverzögerungen genannt.

EP 0 893 154 A beschreibt verschiedene abgastemperatursteigemde Maßnahmen zur Entschwefelung eines NOₓ-Speichers bei einem Dieselmotor. Diese umfassen insbesondere gemäßigte Drosselung des Motors unter Beibehaltung des Magerbetriebs, Verschiebung des Kraftstoffeinspritzbeginns in Richtung spät, Nacheinspritzung von Kraftstoff sowie Kraftstoffeindüsung in das Abgas. Die Erhöhung der Abgastemperatur durch Spätzündung bei einer Entschwefelung einer NOₓ-Falle ist auch aus EP 0 860 595 A bekannt, die femer eine Kompensation des verringerten Drehmoments über die Luftzufuhr zum Motor vorsieht.

Femer ist bekannt, der Magerbrennkraftmaschine Mittel zur Steuerung wenigstens eines Zylinders zuzuordnen. Damit kann eine selektive Vertrimmung des wenigstens einen Zylinders während eines Betriebes der Magerbrennkraftmaschine erfolgen. So ist aus US 5,758,493 A bekannt, eine Abgastemperatur eines Magermotors während einer Entschwefelung des Katalysatorsystems mit einem Vorkatalysator und einem NOₓ-Speicherkatalysator zu regeln, indem ein Teil der Zylinder mit einem fetten und der andere Teil mit einem mageren Luft-Kraftstoff-Gemisch betrieben wird. Hierdurch wird eine Reduktionsmittelemission gegenüber dem Normalbetrieb erhöht. Dabei sieht diese Schrift femer vor, durch geeignete Maßnahmen das fette und das magere Abgas erst stromab des 3-Wege-Vorkatalysators zusammenzuführen, so dass die exotherme katalytische Umsetzung erst in dem aufzuheizenden NOₓ-Speicherkatalysator stattfindet, was aber zu schädlichen örtlichen und zeitlichen Temperaturspitzen führen kann.

Daneben ist es bekannt, in dem Abgaskanal geeignete Sensoren anzuordnen, die beispielsweise die Abgastemperatur oder einen Anteil ausgewählter Gaskomponenten am Gasgemisch erfassen können. Ebenso können in bekannter Weise mit Hilfe von Modellen derartige Betriebsparameter berechnet werden.

Der Erfindung liegt die Aufgabe zugrunde, eine alternative Maßnahme zur Erhöhung der Abgastemperatur zur Verfügung zu stellen, die es weitestgehend ohne Änderung der Gesamtenergieabgabe der Magerbrennkraftmaschine erlaubt, eine schnelle und gleichzeitig schonende Aufheizung des NOₓ-Speicherkatalysators durchzuführen.

Erfindungsgemäß wird diese Aufgabe durch ein Verfahren zur Regelung der Abgastemperatur mit den im Anspruch 1 genannten Merkmalen gelöst. Gemäß dem Verfahren wird die Abgastemperatur gemessen und/oder berechnet und mit einer Mindestentschwefelungstemperatur verglichen und - sofern die Abgastemperatur unterhalb der Mindestentschwefelungstemperatur liegt - eine Temperaturerhöhung des Abgases durch eine selektive Vertrimmung wenigstens eines Zylinders der Magerbrennkraftmaschine derart durchgeführt, dass eine Reduktionsmittelemission erhöht wird und zumindest ein Teil der erhöhten Reduktionsmittelemission in dem Vorkatalysator umgesetzt wird. Auf diese Weise erfolgt eine exotherme Oxidation der Reduktionsmittel zumindest teilweise bereits im Vorkatalysator, so dass das so erwärmte Abgas den nachgeschalteten NOₓ-Speicherkatalysator gleichmäßig und schonend beaufschlagt. Zudem wird während der Entschwefelung ein Verlauf einer Gesamtenergieabgabe der Magerbrennkraftmaschine erfasst und die selektive Vertrimmung des wenigstens einen Zylinders derart gesteuert, dass die Gesamtenergieabgabe der Magerbrennkraftmaschine weitestgehend konstant gehalten wird. Durch diese erfindungsgemäße Maßnahme wird die Entschwefelung so weit es geht drehmomentneutral, das heißt ohne Einfluss auf die jeweilige Fahrsituation durchgeführt.

Erfolgt während der Maßnahme zur Erhöhung der Abgastemperatur eine Änderung der Gesamtenergieabgabe durch eine erhöhte Lastanforderung an die Magerbrennkraftmaschine, so kann die selektive Vertrimmung wenigstens eines Zylinders unterbrochen werden. Die Lastanforderung führt in diesem Fall von sich aus bereits zu einer Erhöhung der Abgastemperatur, und daher ist eine zusätzliche Maßnahme nicht mehr notwendig.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnung, die eine schematische Schnittansicht durch ein Katalysatorsystem für eine Magerbrennkraftmaschine zeigt, näher erläutert.

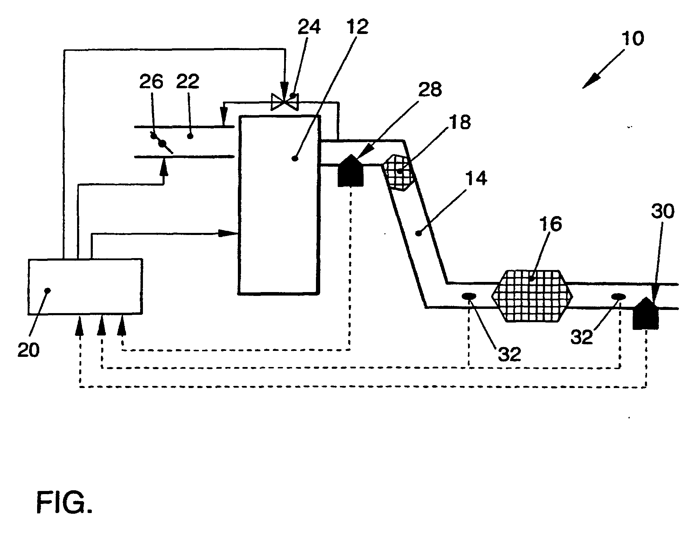

Die Figur zeigt eine Anordnung eines Katalysatorsystems 10 zur Reinigung eines Abgases einer Magerbrennkraftmaschine 12. Dabei ist das Katalysatorsystem 10 innerhalb eines Abgaskanals 14 angeordnet. Das Katalysatorsystem 10 umfasst einen NOₓ-Speicherkatalysator 16 und einen Vorkatalysator 18. Der Vorkatalysator 18 kann als ein 3-Wege-Katalysator ausgelegt sein, das heißt, er kann einerseits eine Oxidation von Reduktionsmitteln, wie CO, HC oder H₂, des Abgases ermöglichen als auch eine Reduktion von NOₓ katalysieren. Die Funktionsweise eines solchen Vorkatalysators 18 ist bekannt und soll im Rahmen dieser Beschreibung nicht weiter erläutert werden.

Die Magerbrennkraftmaschine 12 kann hinsichtlich eines Verhältnisses eines Sauerstoffanteils zu einem Kraftstoffanteil in insgesamt drei verschiedenen Arbeitsmodi betrieben werden. Liegt Sauerstoff im Überschuß vor, so ist λ > 1 (Magerbetrieb). Überwiegt hingegen der Kraftstoffanteil, so ist λ < 1 (Fettbetrieb), und bei Vorliegen eines stöchiometrischen Gleichgewichts ist λ = 1 (stöchiometrischer Betrieb).

Ein solcher Arbeitsmodus der Magerbrennkraftmaschine 12 kann in bekannter Weise mittels eines Motorsteuergerätes 20 reguliert werden. Dabei wird entsprechend einem geforderten Arbeitsmodus der Sauerstoffanteil in einem Saugrohr 22 vor einer Verbrennung eingestellt, beispielsweise indem über ein Abgasrückführventil 24 Abgas in das Saugrohr 22 geleitet wird und über eine Drosselklappe 26 ein Volumenstrom gesteuert wird. Eine Zusammensetzung des Abgases kann durch ein Gassensorelement 28 erfaßt werden. Ferner ist hier ein Gassensorelement 30 hinter dem NOₓ-Speicherkatalysator 16 angeordnet, und zudem ermöglichen Temperatursensoren 32, die in ausgewählten Bereichen des Abgaskanals 14 angeordnet werden, eine Erfassung einer Abgastemperatur.

Im verbrauchsgünstigen Magerbetrieb der Magerbrennkraftmaschine 12 ist der Anteil der Reduktionsmittel am Abgas gemindert und eine ausreichende Umsetzung von NOₓ findet nicht mehr statt. Zur Abhilfe wird das NOₓ in den NOₓ-Katalysator 16 als Nitrat absorbiert und zwar so lange, bis eine NOₓ-Speicherkapazität erschöpft oder eine NOₓ-Desorptionstemperatur überschritten wird. Neben der Absorption von NOₓ kann auch SOₓ absorbiert werden, das während des Verbrennungsvorganges entsteht. Durch diesen Prozeß wird die NOₓ-Speicherkapazität und eine katalytisch aktive Oberfläche, an der bei λ ≤ 1 die katalytische Umsetzung des NOₓ stattfindet, verringert. Entscheidend für eine hohe Langzeitaktivität des NOₓ-Speicherkatalysators 16 ist daher eine hinreichende Entschwefelung.

Ein Zeitpunkt, ab dem die Entschwefelung initiiert werden soll, kann durch einen Grenzwert vorgegeben werden, der ein Verhältnis der NOₓ-Konzentration stromauf und stromab des NOₓ-Speicherkatalysators 16 in Abhängigkeit von einer im NOₓ-Speicherkatalysator 16 eingelagerten NOₓ-Masse wiedergibt. Dazu genügt es häufig, mittels des Gassensorelementes 30 die NOₓ-Konzentration stromab des NOₓ-Speicherkatalysators 16 zu erfassen, und mit Hilfe von Erfahrungswerten kann dann eine Effizienz des NOₓ-Speicherkatalysators 16 und damit ein Verschwefelungsgrad ermittelt werden.

Um die Entschwefelung zu ermöglichen, müssen zumindest zwei Bedingungen erfüllt sein. Zum einen muss eine Mindestentschwefelungstemperatur im Bereich des NOₓ-Speicherkatalysators 16 erreicht werden und zum anderen muss der Arbeitsmodus der Magerbrennkraftmaschine 12 bei λ ≤ 1 liegen (SOₓ-Regenerationsparameter). Ist Lambda sehr viel kleiner als 1, so wird bei der Reduktion des Sulfats überwiegend H₂S gebildet, während bei einem Arbeitsmodus um λ = 1 überwiegend SO₂ gebildet wird.

Häufig ist in einem dynamischen Betrieb der Magerbrennkraftmaschine 12 eine niedrigere Temperatur als die Mindestentschwefelungstemperatur gegeben, so dass durch geeignete Maßnahmen der NOₓ-Speicherkatalysator 16 aufgeheizt werden muss.

Ferner sind der Magerbrennkraftmaschine 12 hier nicht dargestellte Mittel zugeordnet, die eine selektive Vertrimmung wenigstens eines Zylinders der Magerbrennkraftmaschine 12 erlauben. Eine Steuerung derartiger Mittel kann ebenfalls über das Motorsteuergerät 20 erfolgen. Durch eine zylinderselektive Vertrimmung der Magerbrennkraftmaschine 12 wird eine Emission der Reduktionsmittel erhöht. In dem Vorkatalysator 18, der zwischen der Magerbrennkraftmaschine 12 und dem NOₓ-Speicherkatalysator 16 liegt, werden die Reduktionsmittel zumindest zum Teil oxidiert, wobei diese Umsetzung exotherm ist und damit zu einer Erhöhung der Abgastemperatur führt.

Die selektive Vertrimmung wenigstens eines Zylinders zur Erhöhung der Abgastemperatur erfolgen derart, daß eine Gesamtenergieabgabe der Magerbrennkraftmaschine 12 weitestgehend konstant verläuft. Dazu wird ein Verlauf der Gesamtenergieabgabe gemessen, beispielsweise anhand einer leistungsäquivalenten Größe, wie der aus Drehzahl, Einspritzmenge und Ansaugluftmasse oder einem anderen geeigneten Modell berechneten Leistung der Magerbrennkraftmaschine 12. Die selektive Vertrimmung wenigstens eines Zylinders erfolgt dann entsprechend dem Verlauf der Gesamtenergieabgabe.

In bevorzugter Weise wird bei einer Änderung der Gesamtenergieabgabe infolge einer erhöhten Lastanforderung an die Magerbrennkraftmaschine 12 die selektive Vertrimmung des Zylinders abgebrochen, da die erhöhte Lastanforderung an sich bereits zu einer Abgastemperaturerhöhung führt.

## Patentansprüche

1. Verfahren zur Regelung einer Abgastemperatur einer Magerbrennkraftmaschihe (12) während einer Entschwefelung eines Katalysatorsystems (10) zur Reinigung eines Abgases der Magerbrennkraftmaschine (12), wobei das Katalysatorsystem (10) in einem Abgaskanal (14) der Magerbrennkraftmaschine (12) angeordnet ist und einen Vorkatalysator (18) und wenigstens einen NOₓ-Speicherkatalysator (16) umfasst sowie der Magerbrennkraftmaschine (12) Mittel zur selektiven Steuerung wenigstens eines Zylinders zugeordnet sind, wobei
(a) die Abgastemperatur gemessen und/oder berechnet und mit einer Mindestentschwefelungstemperatur verglichen wird und
(b) sofern die Abgastemperatur unterhalb der Mindestentschwefelungstemperatur liegt, eine Temperaturerhöhung des Abgases durch eine selektive Vertrimmung wenigstens eines Zylinders der Magerbrennkraftmaschine (12) derart erfolgt, dass eine Reduktionsmittelemission erhöht wird,
**dadurch gekennzeichnet, dass**
zumindest ein Teil der erhöhten Reduktionsmittelemission in dem Vorkatalysator (18) umgesetzt wird und ein Verlauf einer Gesamtenergieabgabe der Magerbrennkraftmaschine (12) während der Entschwefelung erfasst wird und die selektive Vertrimmung des wenigstens einen Zylinders derart gesteuert wird, dass die Gesamtenergieabgabe der Magerbrennkraftmaschine (12) weitestgehend konstant gehalten wird.

2. Verfahren nach Anspruch 1, **dadurch gekennzeichnet, dass** bei einer Änderung der Gesamtenergieabgabe infolge einer erhöhten Lastanforderung an die Magerbrennkraftmaschine (12) die selektive Vertrimmung des wenigstens einen Zylinders abgebrochen wird.

## Claims

1. Method for regulating an exhaust-gas temperature of a lean combustion engine (12) during a desulfurisation of a catalyst system (10) for cleaning an exhaust gas of the lean combustion engine (12), wherein the catalyst system (10) is arranged in an exhaust duct (14) of the lean combustion engine (12) and comprises a pre-catalyst (18) and at least one NOₓ storage catalyst (16), and wherein means for the selective control of at least one cylinder are allocated to the lean combustion engine (12), wherein
(a) the exhaust-gas temperature is measured and/or calculated and compared with a minimum desulfurisation temperature and,
(b) if the exhaust-gas temperature is disposed below the minimum desulfurisation temperature, a temperature increase of the exhaust gas is implemented by means of a selective trimming of at least one cylinder of the lean combustion engine (12), in such a manner that an emission of reducing agents is increased,
**characterised in that**
at least a part of the increased emission of reducing agents is converted in the pre-catalyst (18), that a characteristic for an overall energy output of the lean combustion engine (12) is registered during the desulfurisation, and that the selective trimming of the at least one cylinder is controlled in such a manner that the overall energy output of the lean combustion engine (12) is held as constant as possible.

2. Method according to claim 1, **characterised in that,** in the event of a change in the overall energy output as a result of an increased loading requirement of the lean combustion engine (12), the selective trimming of the at least one cylinder is interrupted.

## Revendications

1. Procédé destiné à la régulation d'une température des gaz d'échappement d'un moteur à combustion interne (12) fonctionnant en régime pauvre pendant une désulfuration d'un système catalytique (10) pour épuration d'un gaz d'échappement du moteur à combustion interne (12) fonctionnant en régime pauvre, le système catalytique (10) étant disposé dans un tuyau de gaz d'échappement (14) du moteur à combustion interne (12) fonctionnant en régime pauvre, et comportant un pré-catalyseur (18) et au moins un catalyseur à accumulation de NOₓ (16), et des moyens pour la commande sélective d'au moins un cylindre étant associés au moteur à combustion interne (12) fonctionnant en régime pauvre, dans lequel
(a) la température des gaz d'échappement est mesurée et/ou calculée, et comparée avec une température minimale de désulfuration, et
(b) dans la mesure où la température des gaz d'échappement est inférieure à la température minimale de désulfuration, une augmentation de la température des gaz d'échappement est effectuée par une compensation sélective d'au moins un cylindre du moteur à combustion interne (12) fonctionnant en régime pauvre, de telle sorte qu'une émission d'agents réducteurs soit accrue,
**caractérisé en ce que**
une partie au moins de l'émission accrue d'agents réducteurs est convertie dans le pré-catalyseur (18), **en ce qu'**une évolution de l'ensemble de l'énergie délivrée par le moteur à combustion interne (12) fonctionnant en régime pauvre est détectée pendant la désulfuration, et **en ce que** la compensation sélective du, au moins un, cylindre est commandée de telle sorte que l'ensemble de l'énergie délivrée par le moteur à combustion interne (12) fonctionnant en régime pauvre soit maintenu à un niveau aussi constant que possible.

2. Procédé selon la revendication 1, **caractérisé en ce que**, lors d'une modification de l'ensemble de l'énergie délivrée, due à une charge accrue demandée au moteur à combustion interne (12) fonctionnant en régime pauvre, la compensation sélective du, au moins un, cylindre est interrompue.
